# EUROPEAN PATENT SPECIFICATION

(11) **EP 3 091 403 B1**
(45) Date of publication and mention of the grant of the patent: **17.07.2019**
(21) Application number: 16167450.2
(22) Date of filing: 28.04.2016
(51) Int. Cl.: G05B 19/042, G06F 9/451

(54) **HUMAN-MACHINE INTERFACE SYSTEM**
MENSCH-MASCHINE-SCHNITTSTELLENSYSTEM
SYSTÈME D'INTERFACE HOMME MACHINE

(30) Priority: 04.05.2015 KR 20150062450
(43) Date of publication of application: 09.11.2016
(73) Proprietor: LSIS Co., Ltd., Gyeonggi-Do 14119 (KR)
(72) Inventor: PARK, Ayeon, Anyang-si Gyeonggi-do 14118 (KR)
(74) Representative: K&L Gates LLP

(56) References cited:
- EP-A2- 1 906 276
- EP-A2- 2 423 767
- US-A1- 2012 136 888
- US-A1- 2013 086 597

## Description

### BACKGROUND OF THE INVENTION

### 1. Field of the Invention

The present invention relates to a human-machine interface (HMI) system, and more particularly, to an HMI system capable of enhancing ease of HMI file management and maintenance, and readability and re-usability of an HMI file by standardizing an HMI screen.

### 2. Background of the Invention

A programmable logic controller (PLC) device controlling input/output, calculation, power, and the like, of a production line or mechanical devices has been commercialized and used in various industrial fields in conjunction with automation of machinery. Also, in line with the development of the PLC device, various studies regarding a human machine interface (HMI) converting digital data of the PLC device into data that can be recognized by the human being, and preferably, displaying data on a display device such as a touch screen panel have been in progress.

The HMI system is a system for obtaining data to be manipulated, controlled and/or monitored and displaying the data on a screen through communication with a controller when a user configures the screen and a menu. When the HMI receives a request for an operation command regarding a specific device from the user, the HMI requests a data value of an object corresponding to the requested operation command from a PLC, receives response data corresponding to the requested operation command from the PLC, and displays the received response data on a display device such as a touch screen panel, and thus, the user may effectively monitor, manipulate, and control automation equipment using the HMI system.

Also, the user may design graphic appropriate for a process line on the spot and industrial devices installed in the process line using a graphic tool for a PC and subsequently download the designed graphic to the HMI, whereby the user may control and manage monitoring data regarding each of various industrial devices through the graphic displayed on the touch screen panel of the HMI.

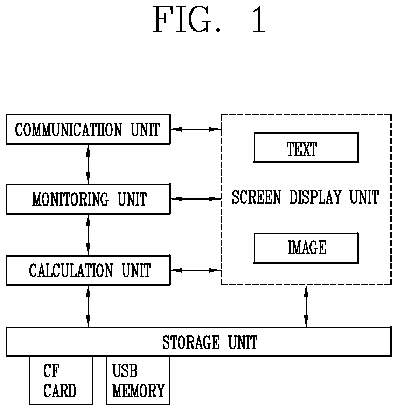

As illustrated in FIG. 1, a general HMI system includes a communication unit, a monitoring unit, a calculation unit, a display unit (or a screen display unit) and a memory (or a storage unit). The HMI system may perform communication with a PLC or other systems through the communication unit, and when the monitoring unit monitors data, the calculation unit calculates a monitored value and outputs a calculated result value to the display unit or stores the calculated result value in the memory. The user may check data displayed through the display unit, and manipulate a menu, or the like. The display unit may include an image display unit and a text display unit. The HMI system may further include an external memory such as a USB memory or a CF card, and periodical and important data such as alarm, recipe, logging, and the like, that may be generated during an operation of the HMI between PLCs may be stored in the external memory through a backup event. Also, according to circumstances, data stored in the external memory may be displayed on the display unit. Here, mass information such an image, font or the like may be stored in the external memory, rather than in an internal memory of the HMI.

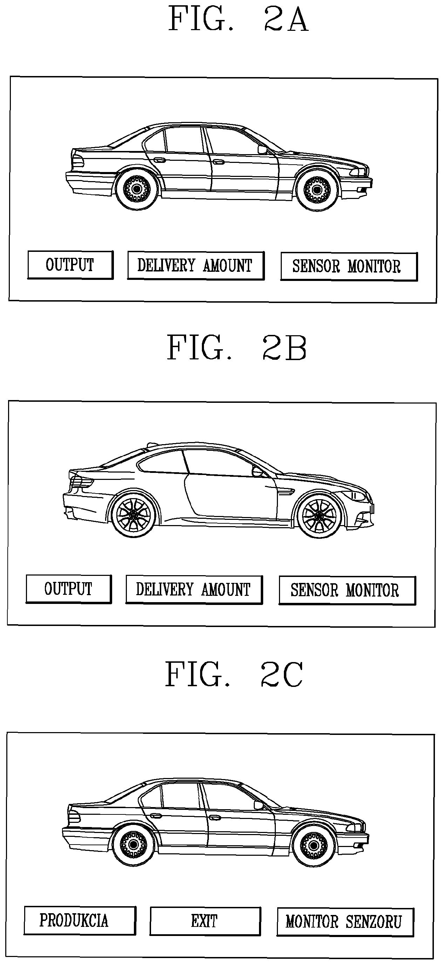

In the related art HMI system, different screens may be configured as follows. For example, referring to FIGS. 2A through 2C, FIG. 2A is a first language HMI user screen regarding a vehicle type A, FIG. 2B is a first language HMI user screen regarding a vehicle type B, and FIG. 2C is a second language HMI user screen regarding the vehicle type A. According to the related art HMI system, as illustrated in FIGS. 2A and 2B, even when a screen in which only vehicle types are different and most processes are the same is configured, a developer (user) opens the vehicle type B file of FIG. 2B in the screen of FIG. 2A, changes every displayed data one by one, and re-transmits the corresponding screen file to the HMI. Also, as illustrated in FIGS. 2A and 2C, in case the vehicle types and processes are the same and text is different by user languages, the developer (user) creates text in the screen of FIG. 2A in each language and re-transmits the corresponding screen file to the HMI. Also, in case an address of a controller (driver) displaying a delivery amount in FIG. 2A is changed or in case the controller is changed to a different model, the developer changes the corresponding address and re-transmit a corresponding controller address file to the HMI.

That is, according to the related art HMI system, even when only a portion of displayed data is changed, HMI screen files are opened one by one and corresponding files are separately created, and transmitted to the HMI again. That is, whenever an image, text, or controller address is changed in the same or similar process, a corresponding item is changed, and a changed file is transmitted again to the HMI, and thus, maintenance is difficult because a plurality of unnecessary repeated files are generated regarding the same process. Also, in case such as improvement of facility or in case of development of a new type car, HMI screen files should be created again by the new car types, thereby causing inefficiency in terms of manpower and time.

In addition, according to the related art, it is difficult to make an HMI file assets and readability of an HMI file is significantly degraded.

US2013086597 A1 discloses a middleware. The middleware maps a plurality of application user interfaces to a single user experience (i.e. user interface) so that a user is more comfortable with how information is presented. The middleware maps key elements of an original user interface into a standard user interface on a user's device. When a user interface is mapped, information or data is taken from the original user interface and is reconfigured to create the standard user interface displayed to the user. In embodiments, the middleware receives data associated with a user interface for an application, interprets the received data, parses the data, translates the parsed data by determining the correct template map and mapping the parsed data to a standard user interface, and configures the standard user interface with the translated data.

### SUMMARY OF THE INVENTION

Therefore, an aspect of the detailed description is to provide a human-machine interface (HMI) system capable of standardizing a HMI screen file and making an HMI file assets.

Another aspect of the detailed description is to facilitate management and maintenance of an HMI file and reduce manpower and time required for HMI file management, by making an HMI file assets.

Another aspect of the detailed description is to provide user convenience and enhance work efficiency by enhancing readability and reusability of an HMI file.

To achieve these and other advantages and in accordance with the purpose of this specification, as embodied and broadly described herein, a human-machine interface (HMI) system as defined in claim 1 is presented. The HMI system may comprises: a display unit including one or more HMI screen configuration data display units displaying HMI screen configuration data; a driver address processing unit including a communication unit performing communication with one or more drivers and a driver address interpreting unit; a storage unit including an HMI screen configuration data storage unit storing the HMI screen configuration data and a driver address storage unit; and a mapping unit configured to read data from the storage unit by using mapping information and provide the read data to the display unit.

The HMI screen configuration data may be one or more data selected from the group consisting of an image, text, a font, and graphic.

The driver address interpreting unit may interpret a value of a driver address by using data received by the communication unit from the one or more drivers.

The storage unit may be an internal memory or an external memory.

The HMI system may further include: a controller configured to perform system controlling according to a user control input.

The mapping information may include mapping table information in which any one data selected from the group consisting of an image, text, a font, graphic, and a driver address are mapped to user identification information.

The communication unit may perform communication with the driver according to a wired communication scheme such as Ethernet or according to any one of wireless communication schemes selected from the group consisting of Bluetooth, radio frequency identification (RFID), infrared Data Association (IrDA), ultra wideband (UWB), ZigBee, and digital living network alliance (DLNA).

The display unit may be configured as a touch screen and integrally configured with an input device.

According to the present invention, an HMI screen may be standardized by independently operating main configuration data of an HMI system screen.

Also, according to the present invention, since the HMI system screen is standardized, a file may be made to assets and readability, reusability, and maintenance of a file may be enhanced.

Also, according to the present invention, since various images and text may be displayed using a single HMI file without the necessity of repeatedly creating an HMI file, user convenience may be enhanced and manpower or time resource may be reduced.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram illustrating a related art human-machine interface (HMI) system.
FIGS. 2A through 2C are views illustrating the related art HMI system screens.
FIG. 3 is a block diagram illustrating an HMI system according to an embodiment of the present invention.
FIG. 4 is a block diagram illustrating an HMI system according to another embodiment of the present invention.
FIG. 5 is a view illustrating an example of a matching table used in an HMI system according to an embodiment of the present invention.

### DETAILED DESCRIPTION OF THE INVENTION

The present invention may be modified variably and may have various embodiments, particular examples of which will be illustrated in drawings and described in detail. However, it is to be understood that the present invention is not limited to a specific disclosed form, but includes all modifications, equivalents, and substitutions without departing from the scope of the present invention. The following contents merely illustrate the principles of the invention. Therefore, those skilled in the art can invent a wide variety of devices including the concept and scope of the present invention and implementing the principles of the present invention, although a wide variety of the devices are not clearly described or illustrated herein. In addition, it should be construed that all conditional terms and embodiments listed herein are intended only for the purpose of, in principle, understanding the concept of the present invention, and are not limited to the embodiments and state specifically enumerated.

In addition, it should be construed that the principles, a variety of views, and the embodiments of the present invention, as well as every detailed description enumerating specific embodiments include the structural and functional equivalents of these considerations. In addition, it should be construed that these equivalents include currently known equivalents as well as equivalents to be developed in the future, i.e. all elements that are invented to perform the same function, regardless of their structures.

The aforementioned objects, features and advantages will become more apparent through the following detailed description with respect to the accompanying drawings, thus a person with ordinary skill in the art can easily carry out the technical idea of the present invention. In describing the present invention, in case a detailed description of known techniques associated with the present invention unnecessarily obscures the gist of the present invention, it is determined that the detailed description thereof will be omitted

Embodiments of the present invention will now be described in detail with reference to the accompanying drawings.

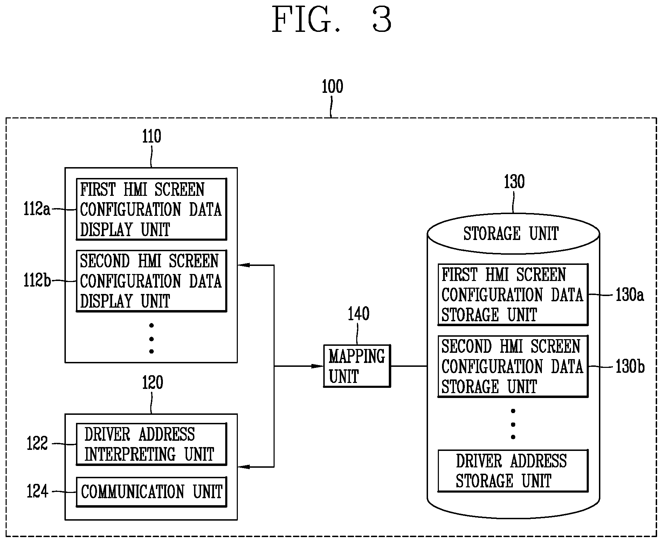

FIG. 3 is a block diagram illustrating human-machine interface (HMI) system 100 according to an embodiment of the present invention. As illustrated in FIG. 3, the HMI system 100 according to an embodiment of the present invention includes a display unit 110, a driver address processing unit 120, a storage unit 130, and a mapping unit 140. The display unit 110 may include one or more HMI screen configuration data display units 112. The display unit 110 may be a device such as a PDP, an LCD, an OLED, a flexible display, a 3D display, or the like, and may be configured as a touch screen and integrally implemented with an input device.

In the embodiment of FIG. 3, an example in which the display unit 110 includes two HMI screen configuration data display units 112a and 112b is illustrated, but the number of the HMI screen configuration data display units 112 is not limited thereto and may be arbitrarily set according to a design purpose and use. HMI screen configuration data refers to data configuring an HMI screen such as an image, text, a font, or graphic. In the present embodiment, an image and text are taken as examples, but any data other than an image or text may be included as long as it configures the HMI screen. Also, a user may designate additional HMI screen configuration data to additionally design an HMI screen configuration data display units (112c, 112d, etc.) (not shown) displaying the corresponding HMI screen configuration data. The first HMI screen configuration data display unit 112a displays first HMI screen configuration data, and the second HMI screen configuration data display unit 112b displays second HMI screen configuration data. In detail, using mapping information of the mapping unit 140 according to a user control input, the first HMI screen configuration data display unit 112a may read first HMI screen configuration data having corresponding mapping information from the first HMI screen configuration data storage unit 130a and display the same on the screen. Also, using mapping information of the mapping unit 140 according to a user control input, the second HMI screen configuration data display unit 112b may read second HMI screen configuration data having corresponding mapping information from the second HMI screen configuration data storage unit 130b and display the same on the screen. For example, in the embodiment of FIG. 3, when it is assumed that an image is designated as first HMI screen configuration data and text is designated as second HMI screen configuration data, the display unit 110 of the HMI system 100 according to the present embodiment may include an image display unit as the first HMI screen configuration data display unit 112a, an image storage unit as the first HMI screen configuration data storage unit 130a, and a text storage unit as the second HMI screen configuration data storage unit 130b. Here, using mapping information according to a user control input, the image display unit may read an image having the corresponding mapping information from the image storage unit and display the same on the screen, and using mapping information according to a user control input, the text display unit reads text having the corresponding information from the text storage unit, and display the same on the screen.

Also, the HMI system 100 according to an embodiment of the present invention may further include a driver address processing unit 120. The driver address processing unit 120 may include a driver address interpreting unit 122 and a communication unit 124. The communication unit 124 may perform communication in such a manner that it transmits and receives data to and from other driver such as a PLC, or the like. The communication unit 124 may use any one of wired communication and wireless communication. As the wired communication, for example, a scheme such as the Ethernet, or the like, may be used, and in case of wireless communication, the communication unit 124 may be connected to a PLC, or the like, using a communication standard such as Bluetooth, radio frequency identification (RFID), infrared Data Association (IrDA), ultra wideband (UWB), ZigBee, digital living network alliance (DLNA), or the like.

The communication unit 124 may perform communication with one or more drivers, and may read data from one or more drivers. When the communication unit 124 receives data from each driver, the driver address interpreting unit 122 may interpret a driver address to determine which of drivers the requested data value is, and select a corresponding driver.

Also, the HMI system 100 according to an embodiment of the present invention may further include a storage unit 130. The storage unit 130 may store HMI screen configuration data such as an image, text, font, or graphic, and data such as a driver address, or the like. In FIG. 3, an example in which the storage unit 130 includes a first HMI screen configuration data storage unit, a second HMI screen configuration data storage unit, and a driver address storage unit is illustrated, but this is merely an embodiment and the storage unit 130 constituting the HMI system 100 is not limited thereto. In the embodiment of FIG. 3, first HMI screen configuration data (for example, an image) may be stored in the first HMI screen configuration data storage unit, second HMI screen configuration data (for example, text) may be stored in the second HMI screen configuration storage unit, and driver address data may be stored in the driver address storage unit. In this manner, each data may be stored in a corresponding data storage unit. As described above, when an HMI screen is displayed on the display unit 110, information is requested from the storage unit 130 through the mapping unit 140, and the storage unit 130 may search for data corresponding to mapping information and transmit the same to the display unit 110. Meanwhile, although not shown, an application program required for driving an HMI system may be stored in the storage unit 130.

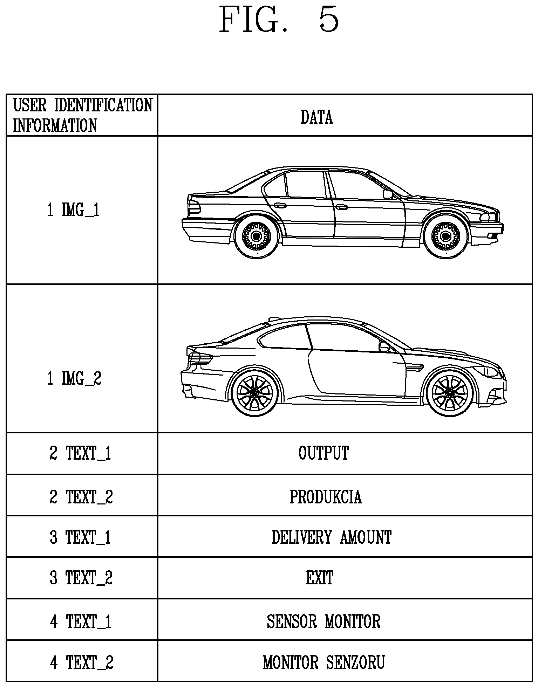

Also, the HMI system 100 according to an embodiment may further include a mapping unit 140. Using predetermined mapping information, the mapping unit 140 may read data corresponding to the mapping information from the storage unit 130 and display the same on the display unit 110. The mapping information may include mapping table information, and a mapping table will be described with reference to FIG. 5 hereinafter.

Meanwhile, the HMI system according to an embodiment of the present invention may further include a controller (not shown). The controller generally controls a general operation of the HMI system 100. The controller may provide appropriate information or a function to a user or process appropriate information or a function by processing signals, data, or information transmitted to or from the HMI system 100, or by performing controlling such that various data stored in the storage unit 130 is read. Also, the controller may control each unit such as the display unit or the communication unit constituting the HMI system and provide a simulation state and operation data of an HMI and a PLC to the user.

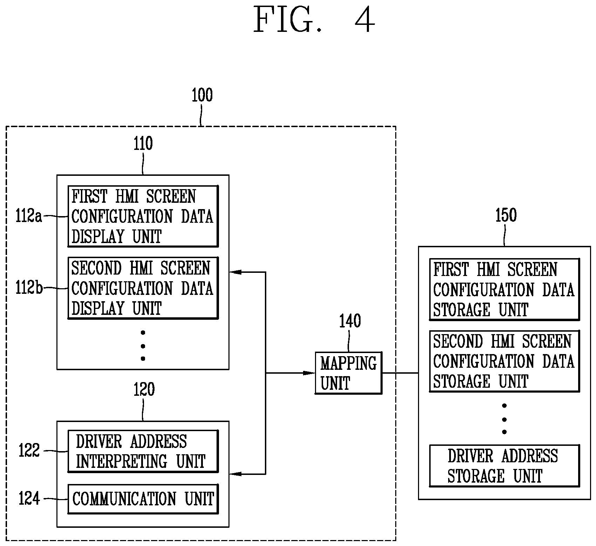

Meanwhile, as illustrated in FIG. 4, the HMI system 100 according to another embodiment of the present invention may have an external memory 150. The external memory 150 may be a memory such as a USB memory or a CF card. Also, the data stored in the storage unit 130 within the system 100 in the embodiment of FIG. 3 may be stored in the external memory 150 and utilized in the embodiment of FIG. 4. That is, the HMI screen configuration data such as an image, text, font, or graphic, or data such as a driver address, or the like, may be stored in the external memory 150. The data such as an image, text, or a driver address having mapping information stored in the external memory 150 may be easily accessed, and the HMI may be easily accessed without a transmission procedure via a network.

Referring to FIG. 5, an example of mapping information stored in the mapping unit 140 forming the HMI system 100 according to an embodiment of the present invention is illustrated. As illustrated in FIG. 5, for example, mapping information may be mapping table information, and the mapping table information may include user identification information and data. The mapping table of FIG. 5 correspond to an embodiment of the present invention and it is obvious that a configuration item and data may be designed to be modified according to a user setting. In FIG. 5, a mapping table is configured using data required for configuring an HMI screen illustrated in FIGS. 2A to 2C. For example, a data value mapped to user identification information 1IMG_1 may be an image value of a vehicle type A, and a data value mapped to user identification information 1IMG_2 may be an image value of a vehicle type B. Also, data values respectively mapped to user identification information 2TEXT_1, 2TEXT_2, 3TEXT_1, 3TEXT_2, 4TEXT_1, and 4TEXT_2 may be text such as "output", "PRODUKCIA", "delivery amount", "EXIT", "sensor image", and "MONITOR SENZORU". As in the aforementioned example, the user may create a mapping table such that HMI screen configuration data is matched to each user identification information. By using such a mapping table, the user (developer) may manage only a standardized HMI screen (for example, FIG. 2A), and in case of new car model development (for example, FIG. 2B), the user (developer) may correct an HMI screen by changing only image data stored in the memory and reading the same by using the mapping table information. That is, the user may read the HMI screen configuration data such as an image, text, a font, or graphic, or driver address data stored in the internal storage unit 130 or the external memory 150 and display the same on the display unit 110, whereby various images or text may be displayed, while re-using a single HMI file.

As described above, according to embodiments of the present invention, an HMI screen may be standardized by independently operating HMI system screen configuration data, and readability, re-usability, and maintenance of an HMI file may be enhanced through HMI file standardization and by making an HMI file assets. Also, since various images or text may be displayed by using a single HMI file without the necessity of generating an HMI file repeatedly, user convenience may be enhanced.

In the foregoing, although the embodiments according to the present invention have been described, the described embodiments are merely illustrative, so that a person with ordinary skill in the art would understand that it is possible to derive various modifications and equivalent embodiments from the described embodiments. Accordingly, the true technical scope of protection of the present invention should be defined in the following claims.

## Claims

1. A human-machine interface (HMI) system (100) for standardizing an HMI screen, wherein the HMI system comprises:
a display unit (110);
a driver address processing unit (120) including a communication unit (124) performing communication with one or more drivers and receiving driver address data of the one or more drivers from the communication; **characterized in:**
**that** the display unit (110) includes a plurality of HMI screen configuration data display units (112a, 112b, 112c, 112d) each displaying respective HMI screen configuration data, wherein the HMI screen configuration data is one or more data selected from the group consisting of an image, text, a font, and graphic;
a storage unit (130; 150) including a plurality of HMI screen configuration data storage units (130a, 130b) each storing the respective HMI screen configuration data, and a driver address storage unit configured to store the driver address data;
a mapping unit (140) configured to read mapping information according to user identification information from the storage unit (130; 150), wherein the mapping information includes mapping table information in which a first HMI screen configuration data, a second HMI screen configuration data and the driver address data are mapped to the user identification information, wherein the mapping unit (140) is further configured to provide the first HMI screen configuration data and the second HMI screen configuration data to the display unit (110);
wherein a first HMI screen configuration data display unit (112a) of the plurality of HMI screen configuration data display units (112a, 112b, 112c, 112d) is configured to display the first HMI screen configuration data,
wherein a second HMI screen configuration data display unit (112b) of the plurality of HMI screen configuration data display units (112a, 112b, 112c, 112d) is configured to display the second HMI screen configuration data, and
wherein the second HMI screen configuration data is different from the first HMI screen configuration data.

2. The HMI system of claim 1, wherein the storage unit (130; 150) is an internal memory (130) or an external memory (150).

3. The HMI system (100) of claim 1, further comprising:
a controller configured to perform system controlling according to a user control input.

4. The HMI system of claim 1, wherein the communication unit (124) performs communication with the one or more drivers according to a wired communication scheme such as Ethernet or according to any one of wireless communication schemes selected from the group consisting of Bluetooth, radio frequency identification (RFID), infrared Data Association (IrDA), ultra wideband (UWB), ZigBee, and digital living network alliance (DLNA).

5. The HMI system of claim 1, wherein the display unit (110) is configured as a touch screen and integrally configured with an input device.

## Patentansprüche

1. Ein Mensch-Maschine-Schnittstellensystem (HMI-System) (100) zum Standardisieren eines HMI-Bildschirms, wobei das HMI-System umfasst:
eine Anzeigeeinheit (110);
eine Treiberadressenverarbeitungseinheit (120), die eine Kommunikationseinheit (124) enthält, die eine Kommunikation mit einem oder mehreren Treibern durchführt und Treiberadressendaten des einen oder der mehreren Treiber von der Kommunikation empfängt;
**dadurch gekennzeichnet:**
**dass** die Anzeigeeinheit (110) eine Vielzahl von HMI-Bildschirmkonfigurationsdaten-Anzeigeeinheiten (112a, 112b, 112c, 112d) beinhaltet, die jeweils entsprechende HMI-Bildschirmkonfigurationsdaten anzeigen, wobei die HMI-Bildschirmkonfigurationsdaten ein oder mehrere Daten sind, die aus der Gruppe ausgewählt werden, die aus einem Bild, Text, einer Schriftart und einer Grafik besteht;
eine Speichereinheit (130; 150), die eine Vielzahl von HMI-Bildschirmkonfigurationsdaten-Speichereinheiten (130a, 130b) beinhaltet, die jeweils die entsprechenden HMI-Bildschirmkonfigurationsdaten speichern, und eine Treiberadressenspeichereinheit, die zum Speichern der Treiberadressendaten konfiguriert ist;
eine Zuordnungseinheit (140), die zum Lesen von Zuordnungsinformationen gemäß Benutzeridentifikationsinformationen aus der Speichereinheit (130; 150) konfiguriert ist, wobei die Zuordnungsinformationen Zuordnungstabelleninformationen beinhalten, in denen erste HMI-Bildschirmkonfigurationsdaten, zweite HMI-Bildschirmkonfigurationsdaten und die Treiberadressendaten den Benutzeridentifikationsinformationen zugeordnet werden, wobei die Zuordnungseinheit (140) ferner konfiguriert ist, die ersten HMI-Bildschirmkonfigurationsdaten und die zweiten HMI-Bildschirmkonfigurationsdaten an die Anzeigeeinheit (110) bereitzustellen;
wobei eine erste HMI-Bildschirmkonfigurationsdaten-Anzeigeeinheit (112a) der Vielzahl von HMI-Bildschirmkonfigurationsdaten-Anzeigeeinheiten (112a, 112b, 112c, 112d) konfiguriert ist, die ersten HMI-Bildschirmkonfigurationsdaten anzuzeigen,
wobei eine zweite HMI-Bildschirmkonfigurationsdaten-Anzeigeeinheit (112b) der Vielzahl von HMI-Bildschirmkonfigurationsdaten-Anzeigeeinheiten (112a, 112b, 112c, 112d) konfiguriert ist, die zweiten HMI-Bildschirmkonfigurationsdaten anzuzeigen, und
wobei sich die zweiten HMI-Bildschirmkonfigurationsdaten von den ersten HMI-Bildschirmkonfigurationsdaten unterscheiden.

2. HMI-System nach Anspruch 1, wobei die Speichereinheit (130; 150) ein interner Speicher (130) oder ein externer Speicher (150) ist.

3. HMI-System (100) nach Anspruch 1, ferner umfassend:
eine Steuerung, die konfiguriert ist, eine Systemsteuerung gemäß einer Benutzersteuerungseingabe durchzuführen.

4. HMI-System nach Anspruch 1, wobei die Kommunikationseinheit (124) die Kommunikation mit dem einen oder den mehreren Treibern gemäß einem verdrahteten Kommunikationsschema wie Ethernet oder gemäß einem der drahtlosen Kommunikationsschemata, ausgewählt aus der Gruppe, bestehend aus Bluetooth, Radio Frequency Identification (RFID), Infrarot Data Association (IRDA), Ultra Wideband (UWB), ZigBee und Digital Living Network Alliance (DLNA) durchführt.

5. HMI-System nach Anspruch 1, wobei die Anzeigeeinheit (110) als ein Berührungsbildschirm konfiguriert ist und integral mit einem Eingabegerät konfiguriert ist.

## Revendications

1. Système d'interface homme-machine (HMI) (100) destiné à normaliser un écran de HMI, dans lequel le système de HMI comprend :
une unité d'affichage (110) ;
une unité de traitement d'adresse de pilote (120) comprenant une unité de communication (124) réalisant une communication avec un ou plusieurs pilotes et recevant des données d'adresse de pilote des un ou plusieurs pilotes à partir de la communication ;
**caractérisé en ce que** :
l'unité d'affichage (110) comprend une pluralité d'unités d'affichage de données de configuration d'écran de HMI (112a, 112b, 112c, 122d) affichant chacune des données de configuration d'écran de HMI respectives, dans lequel les données de configuration d'écran de HMI sont une ou plusieurs données choisies dans le groupe constitué par une image, un texte, une police et un graphique ;
une unité de stockage (130 ; 150) comprenant une pluralité d'unités de stockage de données de configuration d'écran de HMI (130a, 130b) stockant chacune les données de configuration d'écran de HMI respectives, et une unité de stockage d'adresse de pilote configurée pour stocker les données d'adresse de pilote ;
une unité de mappage (140) configurée pour lire des informations de mappage selon des informations d'identification d'utilisateur provenant de l'unité de stockage (130 ; 150), dans lequel les informations de mappage comprennent des informations de table de mappage dans lesquelles une première donnée de configuration d'écran de HMI, une deuxième donnée de configuration d'écran de HMI et les données d'adresse de pilote sont mappées aux informations d'identification d'utilisateur, dans lequel l'unité de mappage (140) est en outre configurée pour fournir la première donnée de configuration d'écran de HMI et la deuxième donnée de configuration d'écran HMI à l'unité d'affichage (110) ;
dans lequel une première unité d'affichage de données de configuration d'écran de HMI (112a) de la pluralité d'unités d'affichage de données de configuration d'écran de HMI (112a, 112b, 112c, 112d) est configurée pour afficher la première donnée de configuration d'écran de HMI,
dans lequel une deuxième unité d'affichage de données de configuration d'écran de HMI (112b) de la pluralité d'unités d'affichage de données de configuration d'écran de HMI (112a, 112b, 112c, 112d) est configurée pour afficher la deuxième donnée de configuration d'écran de HMI, et
dans lequel la deuxième donnée de configuration d'écran de HMI est différente de la première donnée de configuration d'écran de HMI.

2. Système de HMI selon la revendication 1, dans lequel l'unité de stockage (130 ; 150) est une mémoire interne (130) ou une mémoire externe (150).

3. Système de HMI (100) selon la revendication 1, comprenant en outre :
un dispositif de commande configuré pour réaliser une commande de système selon une entrée de commande d'utilisateur.

4. Système de HMI selon la revendication 1, dans lequel l'unité de communication (124) réalise une communication avec les un ou plusieurs pilotes selon un système de communication filaire tel qu'Ethernet ou selon l'un quelconque de systèmes de communication sans fil choisis dans le groupe constitué par Bluetooth, une identification par radiofréquence (RFID), une association de données à l'infrarouge (IrDA), bande ultralarge (UWB), ZigBee et Digital living network alliance (DLNA).

5. Système de HMI selon la revendication 1, dans lequel l'unité d'affichage (110) est configurée sous la forme d'un écran tactile et configurée de manière solidaire avec un dispositif d'entrée.
